# EUROPÄISCHE PATENTSCHRIFT

(11) **EP 0 623 756 B1**
(45) Veröffentlichungstag und Bekanntmachung des Hinweises auf die Patenterteilung: **09.04.1997**
(21) Anmeldenummer: 94106867.8
(22) Anmeldetag: 03.05.1994
(51) Int. Cl.: F16B 2/06, F16M 11/24, A47L 13/512

(54) **Haltevorrichtung für Stiele und Rohre von Gerätschaften**
Holding device for handles and tubes of equipment
Support de retenue pour manches et tubes d'équipement

(30) Priorität: 05.05.1993 DE 4314770
(43) Veröffentlichungstag der Anmeldung: 09.11.1994
(73) Patentinhaber: BAJO TRADING ANSTALT, 9496 Balzers (LI)
(72) Erfinder: Wilbs, Alfred, D-79793 Wutöschingen (DE)
(74) Vertreter: Hübner, Hans-Joachim, Dipl.-Ing.

(56) Entgegenhaltungen:
- FR-A- 2 204 993
- US-A- 1 736 290

## Beschreibung

Die Erfindung betrifft eine Haltevorrichtung für Stiele und Rohre von Gerätschaften, gemäß Oberbegriff von Anspruch 1.

Eine derartige Haltevorrichtung ist aus der DE-A-34 47 534 bekannt. Diese Haltevorrichtung verwendet ein Paket von Klemmbacken, die je aus einem U-förmigen oder kastenförmigen Drahtbügel bestehen. Ein Schenkel des Bügels bildet die Klemmfläche und der andere den z.B. in einer Bohrung des Halters aufgenommenen Lagerbolzen. Die Klemmung eines Stieles beruht auf dem Kniehebelprinzip. Je mehr sich der Winkel zwischen der Klemmbacke und dem Stiel dem Wert von 90° annähert, umso größer ist die Klemmkraft. Beim Stand der Technik haben alle Bügel des Bügelpaketes unterschiedliche Längen, sodaß je nach Durchmesser des Stieles eine ganz bestimmte Klemmbacke zur Wirkung kommt. Bei sehr glatten Stielen oder Rohren ist die Klemmkraft jedoch nicht ausreichend. Das Gummiteil soll einen Gleitschutz bewirken. Nach der Zeichnung dieses Dokumentes umgibt das Gummirohr den Bügelschenkel mit Radialspiel, sodaß das Gummirohr drehbeweglich ist. Mit dieser Haltevorrichtung lassen sich sehr glatte Rohre insbesondere von schweren Gegenständen nicht sicher festklemmen.

Aufgabe der Erfindung ist es, die Haltevorrichtung der eingangs genannten Art dahingehend zu verbessern, daß ohne Erhöhung der Klemmwirkung der Haltevorrichtung der Gleitschutz verbessert wird.

Diese Aufgabe wird erfindungsgemäß durch die Merkmale des Anspruchs 1 gelöst.

Der Gummibandring gemäß der Erfindung ergibt ein Höchstmaß an Haltewirkung, sodaß auch äußerst glatte Rohre, z.B. verchromte Staubsaugerrohre absolut sicher gehalten werden können. Dies ist bei keiner der bekannten Haltevorrichtungen möglich. Während sich nämlich beim eingangs genannten Stand der Technik das Gummiteil im Klemmflächenbereich lediglich komprimiert, gewährleistet das erfindungsgemäße endlose Gummiband im Klemmflächenbereich eine lokale Streckung, die von einer Verdünnung im Klemmbereich begleitet ist. Weiterhin kann das röhrenförmige Gummiteil nach dem Stand der Technik sich auf dem Bügelschenkel drehen, womit ein Rolleffekt eintritt, der einer hohen Haltewirkung widerspricht. Demgegenüber ist der Gummibandring gemäß der Erfindung mit Vorspannung um die ganze Klemmbacke herum gespannt und kann sich als Ganzes an der Klemmbacke nicht bewegen. Dagegen treten die erwähnten örtlichen Dehnungen auf, die im Klemmflächenbereich am größten sind, aber auch über den deckseitig angrenzenden Teil des Gummibandringes reichen. Diese lokale Streckung des Gummibandringes nach dem Einhängen eines Rohres oder Stieles in die Haltevorrichtung ergibt die extrem hohe Haltekraft.

Gemäß einer Ausgestaltung der Erfindung hat der Gummibandring eine geringere Breite als die Klemmbacke und ist nur deren Mittelbereich zugeordnet, wobei die beiden Endbereiche frei bleiben. Dieses Merkmal ist insbesondere bei der Halterung von Rohren und Stielen vorteilhaft, die im Allgemeinen runde Querschnitte aufweisen. Der Gummibandring ist vorzugsweise in einem umlaufenden Kanal der Klemmbacke verschiebesicher aufgenommen, wobei im Bereich der Klemmfläche der Gummibandring geringfügig über die benachbarten Oberflächen der Klemmbacke vorsteht. Der Kanal hat eine Positionierungfunktion für den Gummibandring, sodaß ein seitliches Verschieben ausgeschlossen ist. Mit Ausnahme des Klemmflächenbereiches kann der Gummibandring in dem Kanal oberflächenbündig verlaufen. Im Klemmflächenbereich nimmt dagegen die Kanaltiefe ab, sodaß der Gummibandring im Rahmen seiner während des Gebrauches eintretenden Komprimierung über die benachbarten Oberflächenabschnitte vorsteht.

Die Klemmfläche der Klemmbacke ist in erster Annäherung etwa halbzylindrisch ausgebildet, also im Klemmflächenbereich konvex gewölbt. Gemäß der Erfindung ist der Mittelbereich der Klemmfläche in einem, die Schwenkachse enthaltenden Axialschnitt V-förmig oder konkav vertieft. Ohne den diese Vertiefung umschließenden Gummibandring, würde sich für den zu haltenden Stiel eine Zweipunktanlage ergeben. Der Gummibandring verformt sich jedoch elastisch entsprechend dem Radius des zu haltenden Stieles, sodaß der Gummibandring flächig anliegt. Je nach der gewählten Tiefe dieser Ausnehmung im Klemmflächenbereich entsteht ein Hohlraum, der außen vom Gummibandring abgedeckt ist.

Auch eine vorteilhafte Weiterbildung ist noch darin zu sehen, daß die Klemmbacke zwischen Klemmfläche und Lagerschale eine deckseitige längliche Vertiefung aufweist, deren Boden vom Gummibandring beabstandet ist. Die Vertiefung wird also vom Gummibandring überspannt und da der Gummibandring in diesem Bereich nicht auf der Klemmbacke aufliegt, kann er sich beim Einklemmen eines Stieles leichter strecken, sodaß vom Klemmflächenbereich her Material leichter nachgezogen werden kann.

Mit dem Merkmal von Anspruch 5 wird erreicht, daß die Klemmbacke leicht auf verschiedene Durchmesserbereiche eingestellt werden kann. Der Lagerbolzen hat vorteilhafterweise eine Doppelfunktion. Er lagert die Klemmbacke am Schieber und legt gleichzeitig den Schieber in der gewünschten Schiebestellung am Träger fest. Das Merkmal von Anspruch 6 führt zu dem Vorteil, daß eine handelsübliche Schenkelfeder auf einfache Weise montiert werden kann und mit Anspruch 7 wird eine weitere Erhöhung der Haltekraft erzielt.

Anhand der Zeichnung, die ein Ausführungsbeispiel darstellt, wird die Erfindung näher beschrieben.

Es zeigt:
- FIG. 1: ein Vorderansicht der neuen Haltevorrichtung,
- FIG. 2: eine horizontale Schnittansicht längs der Linie 2-2 der Figur 1,
- FIG. 3: eine vertikale Schnittansicht längs der Linie 3-3 der Figur 2 mit Darstellung des Trägerquerschnittes,
- FIG. 4: eine Ansicht der Haltevorrichtung ähnlich Figur 1, jedoch mit Veranschaulichtung des großen Spannbereiches, sodaß bei gleicher Lage der Schwenkachse der Klemmbacke dünne und dicke Stangen gehaltert werden können,
- FIG. 5: eine horizontale Schnittansicht längs der Linie 5-5 bei Klemmung einer dicken Stange,
- FIG. 6: eine Schnittansicht längs der Linie 6-6 bei Klemmung einer dünnen Stange,
- FIG. 7: einen Querschnitt der Klemmbacke längs der Linie 7-7 der Figur 9,
- FIG. 8: eine Schnittansicht eines Teils der Klemmbacke in vergrößertem Maßstab,
- FIG. 9: eine Draufsicht auf die Klemmbacke,
- FIG. 10: eine Schnittansicht ähnlich Figur 1, jedoch mit zusätzlicher Gummibandausstattung auch an der Anlagebacke, längs der Linie 10-10 der Figur 11, und
- FIG. 11: eine Querschnittansicht der Haltevorrichtung gemäß Figur 10.

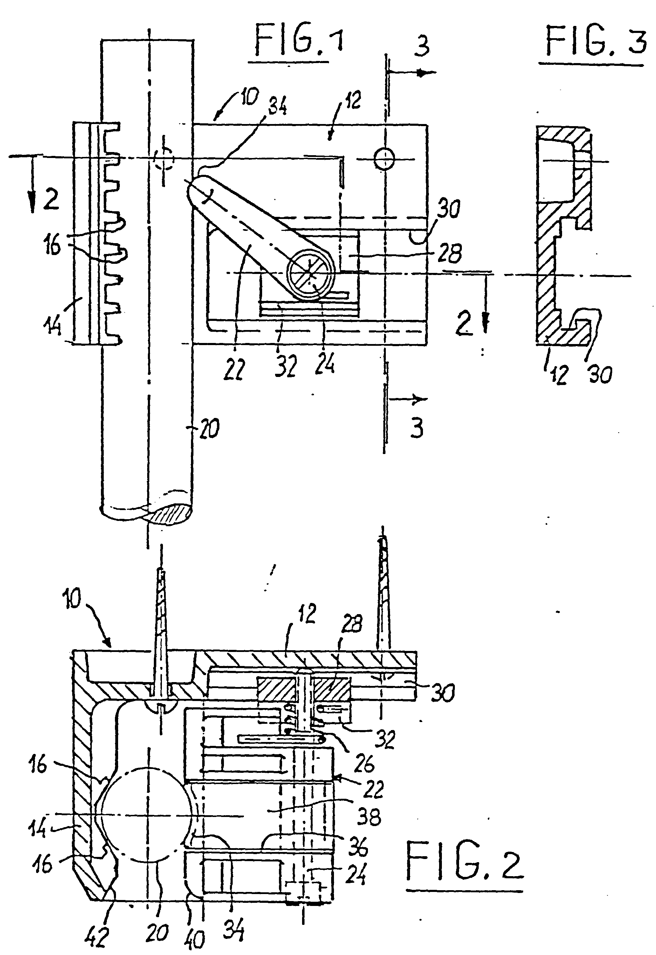

Die Figuren 1-3 zeigen den grundsätzlichen Aufbau der Haltevorrichtung 10 mit plattenförmigen Träger 12 an dessen einem Ende sich eine Anlagebacke 14 rechtwinklig anschließt. Innenseitig trägt die Anlagebacke 14 horizontale Rippen, die miteinander in vertikaler Richtung fluchtende trapezförmige Ausnehmungen zur Bildung von Klemmflächen 16 aufweisen. Diese Anlageflächen 16 bilden einen prismatischen Kanal, der das einzuklemmende Rohr 20 vertikal positioniert.

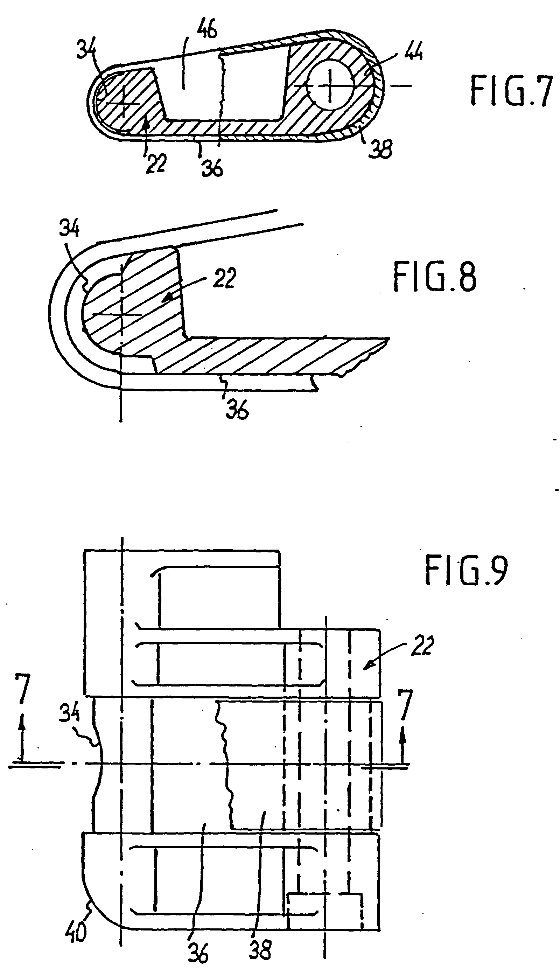

Die Anlagebacke 14 wirkt mit einer Klemmbacke 22 zusammen, die im vorderen Bereich eine konkave Klemmfläche 34 und im hinteren Bereich eine einstückig angeformte Lagerschale 44 (Fig. 7) mit einer Lagerbohrung für einen Lagerbolzen 24 in Form einer Gewindekopfschraube aufweist, um die die Klemmbacke 22 schwenkbar ist. Die Schraube 24 durchsetzt eine Schenkelfeder 26 und ist durch einen Schieber 28 hindurchgeschraubt, der in einer Längsführung 30 am Träger 12 längs verschiebbar geführt ist. In der gewünschten Schiebestellung drückt das Schraubenende gegen den Boden der Längsführung 30 und arretiert den Schieber. Ein Ende der Schenkelfeder 26 stützt sich an einem Bodenvorsprung 32 des Schiebers ab. Der andere Schenkel liegt in einer Tasche der Klemmbacke, die sich in ihrer Ruhestellung auf dem Vorsprung 32 abstützt.

Die Klemmfläche 34 der Klemmbacke 22 ist im Längsschnitt gemäß Figur 1 etwa halbkreisförmig gerundet und weist im Querschnitt gemäß Fig. 2 in ihrem Mittelbereich eine konkave Ausnehmung auf, die mit dem trapezförmigen Ausschnitt der Rippen an der Anlagebacke 14 in Längsrichtung ausgerichtet ist. Die Klemmbacke 22 hat einen ringsum laufenden Kanal 36, der sich um die Klemmfläche 34 und die Lagerschale 44 und den dazwischen liegenden Boden herumerstreckt. Deckseitig mündet der Lagerkanal 36 in einer deckseitigen Aussparung 46 (Fig. 7). Die Tiefe des Lagerkanals 36 ist im Bereich der Klemmfläche 34 etwas geringer als im übrigen Bereich. In diesem Kanal ist ein vorgespannter Gummibandring 38 aufgenommen, der etwa 2-3 cm breit und 1,5 mm dick ist. Die trichterartigen Abrundungen bzw. Abschrägungen 40, 42 an den Backen 14, 22, erleichtern das Einführen des Rohres 20 in den Klemmspalt. Das Rohr 20 zentriert sich selbst und nach dem Loslassen verformt sich der Gummibandring 38 beim Eintreten der Klemmwirkung. Diese Verformung schließt eine Streckung in Umfangsrichtung des Ringes im Bereich der Klemmfläche 34 und eine Konkavverformung des Ringes entsprechend dem Rohrumfang ein. Dank der Streckung wird unterhalb der Klemmzone eine Materialverdickung bewirkt. Dank dieser Verformung des Gummibandringes wird ein Nachrutschen des Rohres 20 auch dann verhindert, wenn dieser eine besonders glatte Oberfläche aufweist.

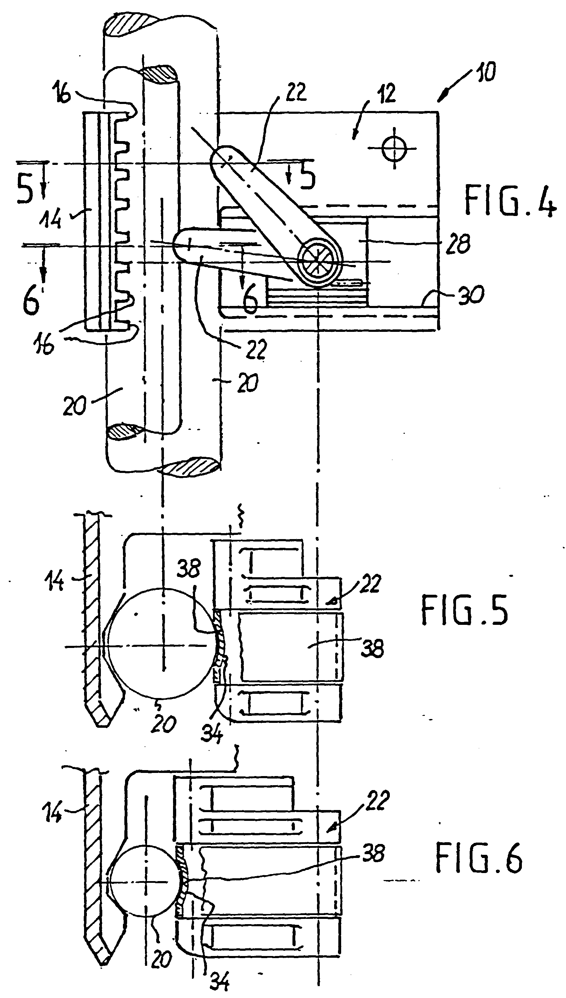

Die Figuren 4-6 zeigen die Stellung der Klemmbacke 22 bei verschieden dicken Rohren 20.

Wie sich aus den Figuren 7-9 ergibt, verläuft der Kanal 36 etwa im mittleren Breitendrittel der Klemmbacke 22. Im Klemmflächenbereich liegt der Gummibandring 38 randseitig auf dem Boden des Kanals 36 auf und bildet zusammen mit der konkaven Ausnehmung im Mittelbereich der Klemmfläche 34 einen sichelförmigen Hohlraum. Dank der Vorspannung des Gummibandringes 38 dringt dieser etwas in den Hohlraum ein. Im Klemmzustand verschiebt das Rohr den Gummibandring 38 tiefer in diese Ausnehmung hinein. Die dadurch bewirkte Querverformung des Gummibandringes und die schon erwähnte Streckung mit der sich unterhalb der Klemmzone ausbildenden Materialkomprimierung führt zu der extrem guten Haltewirkung.

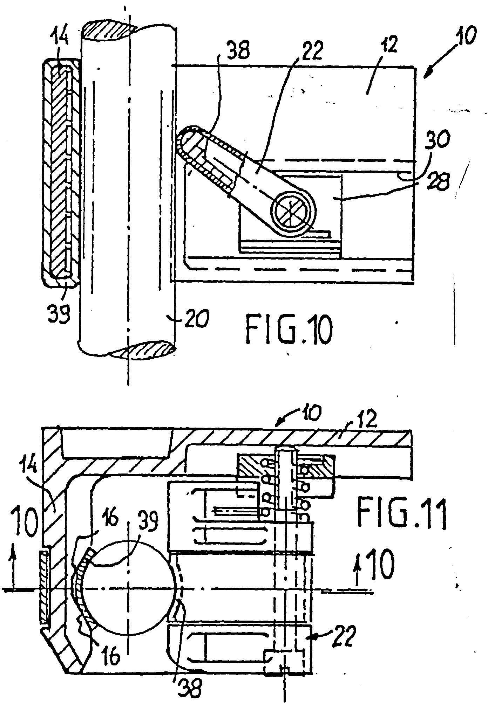

In den Figuren 10 und 11 ist zusätzlich zum Gummibandring 38 auf der beweglichen Klemmbacke 22 ein entsprechender Gummibandring 39 auf der Anlagebacke 14 aufgezogen. Für die allermeisten Fälle ist dieser zusätzliche Gummibandring 39 allerdings nicht erforderlich.

## Patentansprüche

1. Haltevorrichtung für Stiele und Rohre (20) von Gerätschaften, mit einem, an einer Gebäudewand zu befestigenden plattenförmigen Träger (12), von dem eine Anlagebacke (14) mit mindestens einer in Gebrauchsstellung vertikalen Anlagefläche vorsteht und an dem eine federbetätigte Klemmbacke (22) mit einer Lagerbohrung für einen zur Ebene des plattenförmigen Trägers (12) rechtwinkligen und an diesem befestigten Lagerbolzen (24) schwenkbar gelagert ist, wobei die Klemmbacke (22) eine, der Anlagebacke (14) zugewandte, von dem Lagerbolzen (24) abgewandte Klemmfläche (34) aufweist, die in Gebrauchsstellung der Haltevorrichtung (10) um ein Maß oberhalb des Niveaus des Lagerbolzens (24) liegt, das kleiner als die Höhe der Anlagefläche (16) der Anlagebacke (14) ist und mit einem, die Klemmbacke (22) umschlingenden und an dieser unbeweglich gehaltenen, elastisch vorgespannten Gummibandring (38), der zwischen einem ersten etwa halbkreisförmigen Bogen im Bereich der Klemmfläche (34) und einem zweiten etwa halbkreisförmigen Bogen zwei wenigstens angenähert geradlinige oder schwach gekrümmte, gestreckte Abschnitte bildet, **dadurch gekennzeichnet, daß** die Lagerbohrung der Klemmbacke in einer einstückig angeformten Lagerschale (44) gebildet ist, um die sich der Gummibandring (38) mit seinem zweiten halbkreisförmigen Bogen herumerstreckt und daß der Mittelbereich der Klemmfläche (34) der Klemmbacke (22) in einem, den Lagerbolzen (24) enthaltenden Axialschnitt eine V-förmige oder konkave Vertiefung aufweist, die unter Hohlraumbildung vom gespannten Gummibandring (38) abgedeckt ist.

2. Haltevorrichtung nach Anspruch 1, **dadurch gekennzeichnet, daß** der Gummibandring (38) eine geringere Breite als die Klemmbacke (22) aufweist und nur deren Mittelbereich mit freibleibenden Endbereichen zugeordnet ist.

3. Haltevorrichtung nach Anspruch 1 oder 2, **dadurch gekennzeichnet, daß** der Gummibandring (38) in einem umlaufenden Kanal (36) der Klemmbacke (22) verschiebesicher aufgenommen ist und im Bereich der Klemmfläche (34) geringfügig über die benachbarten Oberflächen der Klemmbacke (22) vorstehend angeordnet ist.

4. Haltevorrichtung nach einem der Ansprüche 1 bis 3, **dadurch gekennzeichnet, daß** an der Oberseite der Klemmbacke (22) zwischen Klemmfläche (34) und Lagerschale (44) eine längliche Vertiefung (46) vorgesehen ist, deren Boden vom Gummibandring (38) beabstandet ist.

5. Haltevorrichtung nach einem oder mehreren der Ansprüche 1 bis 4, **dadurch gekennzeichnet, daß** der Träger (12) wenigstens teilsweise als Führungsschiene (30) ausgebildet ist, in welcher ein Schieber (28) von der Anlagebacke (14) weg oder zu ihr hin verschiebbar gelagert ist, der vom Lagerbolzen (24) für die Klemmbacke (22) verschraubbar durchsetzt ist, dessen Ende gegen den Träger (12) drückt und den Schieber (28) am Träger (12) festklemmt.

6. Haltevorrichtung nach Anspruch 5, **dadurch gekennzeichnet, daß** die Feder (26) als vom Lagerbolzen (24) durchsetzte Schenkelfeder ausgebildet ist, deren einer Schenkel an einem Bodenvorsprung (32) des Schiebers (28) und deren anderer Schenkel an einer Auflagefläche der Klemmbacke (22) abgestützt sind.

7. Haltevorrichtung nach einem der Ansprüche 1 bis 6, **dadurch gekennzeichnet, daß** die Anlagebacke (14) von einem sie oben und unten umgreifenden einstückigen Gummibandring (39) unter Vorspannung umschlungen ist.

## Claims

1. A holding device for handles and tubes (20) of apparatus, having a plate-shaped support (12) which is to be secured to a building wall, a bearing jaw (14) with at least one bearing surface positioned vertically in the operational position projecting from this support (12) and a spring-actuated clamping jaw (22) with a bearing bore for a bearing pin (24) which is at right angles to the plane of the plate-shaped support (12) and is secured thereto being pivotally mounted on this support (12), the clamping jaw (22) having a clamping surface (34) which faces the bearing jaw (14), faces away from the bearing pin (24) and in the operational position of the holding device (10) is at a distance above the level of the bearing pin (24) which is less than the height of the bearing surface (16) of the bearing jaw (14), and having a resiliently pre-tensioned rubber tape ring (38) which is wound around the clamping jaw (22) and is fixedly held thereon, this rubber tape ring (38) forming two at least approximately rectilinear or slightly curved, elongate portions between a first approximately semi-circular curve in the region of the clamping surface (34) and a second approximately semi-circular curve, characterised in that the bearing bore of the clamping jaw is formed in an integral bearing shell (44) around which the rubber tape ring (38) extends with its two semi-circular curves, and in that the central region of the clamping surface (34) of the clamping jaw (22) has a V-shaped or concave recess in an axial section passing through the bearing pin (24), this recess being covered by the tensioned rubber tape ring (38) with the formation of a cavity.

2. A holding device in accordance with Claim 1, characterised in that the rubber tape ring (38) is narrower than the clamping jaw (22) and is only associated with the central region thereof leaving its end regions free.

3. A holding device in accordance with Claim 1 or 2, characterised in that the rubber tape ring (38) is received in a displacement-free manner in a circumferential channel (36) of the clamping jaw (22) and in the region of the clamping surface (34) is arranged so as to project slightly beyond the adjacent surfaces of the clamping jaw (22).

4. A holding device in accordance with any one of Claims 1 to 3, characterised in that between the clamping surface (34) and the bearing shell (44) there is an elongate recess (46) provided in the upper side of the clamping jaw (22), the base of this recess (46) being at a distance from the rubber tape ring (38).

5. A holding device in accordance with one or more of Claims 1 to 4, characterised in that at least part of the support (12) is in the form of a guide rail (30) in which a slide (28) is mounted so as to be displaceable away from or towards the bearing jaw (14), the bearing pin (24) for the clamping jaw (22) being able to be screwed through this slide (28) and its end pressing against the support (12) and securing the slide (28) to the support (12).

6. A holding device in accordance with Claim 5, characterised in that the spring (26) is in the form of a leg spring through which the bearing pin (24) passes, one leg of this leg spring being supported on a base projection (32) of the slide (28) and its other leg being supported on a bearing surface of the clamping jaw (22).

7. A holding device in accordance with any one of Claims 1 to 6, characterised in that a one-piece, pre-tensioned rubber tape ring (39) is wound around the bearing jaw (14), engaging around the latter at the top and the bottom.

## Revendications

1. Support de retenue de manches et tubes (20) d'équipement, avec un support (12) en forme de plaque à fixer à une paroi de bâtiment, duquel fait saillie une mâchoire d'appui (14) avec au moins une surface d'appui verticale en position d'utilisation et sur lequel est montée de manière pivotable une mâchoire de serrage (22) actionnée par ressort avec un alésage de montage d'un boulon de montage (24) perpendiculaire au plan du support (12) en forme de plaque et fixé à ce dernier, la mâchoire de serrage (22) présentant une surface de serrage (34), orientée vers la mâchoire d'appui (14) et opposée au boulon de montage (24), qui se situe, en position d'utilisation du support de retenue (10), à une distance au-dessus du niveau du boulon de montage (24) qui est inférieure à la hauteur de la surface d'appui (16) de la mâchoire d'appui (14), et avec un joint plat en caoutchouc (38) prétendu élastiquement, entourant la mâchoire de serrage (22) et retenu de manière immobile sur celle-ci, formant, entre un premier arc environ semi-circulaire à l'endroit de la surface de serrage (34) et un second arc environ semi-circulaire, deux segments s'étendant de manière au moins environ rectiligne ou faiblement courbée, caractérisé par le fait que l'alésage de montage de la mâchoire de serrage est formée dans un plateau de montage (44) formé d'une seule pièce, autour duquel s'étend le joint plat en caoutchouc (38) par son second arc semi-circulaire, et que la partie centrale de la surface de serrage (34) de la mâchoire de serrage (22) présente, dans un segment axial contenant le boulon de montage (24), un creux en forme de V ou concave qui est recouvert par le joint plat en caoutchouc (38) tendu, tout en formant un espace creux.

2. Support de retenue suivant la revendication 1, caractérisé par le fait que le joint plat en caoutchouc (38) présente une largeur inférieure à celle de la mâchoire de serrage (22) et n'est associé qu'à la partie centrale de celle-ci, les parties d'extrémités restant libres.

3. Support de retenue suivant la revendication 1 ou 2, caractérisé par le fait que le joint plat en caoutchouc (38) est reçu de manière immobile dans un canal périphérique (36) de la mâchoire de serrage (22) et est disposé légèrement en saillie, à l'endroit de la surface de serrage (34), par rapport aux surfaces adjacentes de la mâchoire de serrage (22).

4. Support de retenue suivant l'une des revendications 1 à 3, caractérisé par le fait qu'il est prévu, du côté supérieur de la mâchoire de serrage (22), entre la surface de serrage (34) et le plateau de montage (44), un creux allongé (46) dont le fond est distant du joint plat en caoutchouc (38).

5. Support de retenue suivant l'une ou plusieurs des revendications 1 à 4, caractérisé par le fait que le support (12) se présente au moins partiellement sous forme de rail de guidage (30) dans lequel est monté, de manière déplaçable en s'éloignant de la mâchoire d'appui (14) ou vers celle-ci, un curseur (28) qui est traversé, de manière vissable, par le boulon de montage (24) de la mâchoire de serrage (22) dont l'extrémité appuie contre le support (12) et bloque le curseur (28) contre le support (12).

6. Support de retenue suivant la revendication 5, caractérisé par le fait que le ressort (26) se présente sous forme de ressort à branches traversé par le boulon de montage (24) dont l'une des branches s'appuie sur une saillie inférieure (32) du curseur (28) et dont l'autre branche s'appuie sur une surface d'appui de la mâchoire de serrage (22).

7. Support de retenue suivant l'une des revendications 1 à 6, caractérisé par le fait que la mâchoire d'appui (14) est entourée d'un joint plat en caoutchouc (39) d'une seule pièce qui, tout en étant prétendu, vient en prise, dans le haut et dans le bas, autour de celle-ci.
